# EUROPÄISCHE PATENTSCHRIFT

(11) **EP 1 554 473 B1**
(45) Veröffentlichungstag und Bekanntmachung des Hinweises auf die Patenterteilung: **20.12.2006**
(21) Anmeldenummer: 03808663.3
(22) Anmeldetag: 24.06.2003
(51) Int. Cl.: F01N 3/022, B01D 46/12

(54) **ABGASNACHBEHANDLUNGSANORDNUNG**
EXHAUST GAS POST TREATMENT ARRANGEMENT
SYSTEME DE POST-TRAITEMENT DE GAZ D'ECHAPPEMENT

(30) Priorität: 15.10.2002 DE 10247946
(43) Veröffentlichungstag der Anmeldung: 20.07.2005
(73) Patentinhaber: ROBERT BOSCH GMBH, 70442 Stuttgart (DE)
(72) Erfinder: WURSTHORN, Stephan, 70435 Stuttgart (DE); GENSSLE, Andreas, 70771 Musberg (DE); BREUER, Norbert, 71254 Ditzingen (DE)
(86) Internationale Anmeldenummer: PCT/DE2003/002100
(87) Internationale Veröffentlichungsnummer: WO 2004/036003

(56) Entgegenhaltungen:
- WO-A-00/01463
- US-A- 4 390 355
- US-A- 4 846 906

## Beschreibung

### Stand der Technik

Die Erfindung geht aus von einer Anordnung zur Abgasnachbehandlung nach der Gattung des unabhängigen Anspruchs.

Aus der DE 3538107 A1 ist bereits ein Filter zur Reinigung von Abgasen bekannt, bei dem das Material entlang einer Strömungslinie unterschiedliche Porosität aufweist.

Weiterhin sind bereits aus der DE 3529684 keramische Wabenfilterkörper bekannt. Diese beruhen auf dem Wandstromfilterprinzip. Die vom Abgas mitgeführten Partikel werden an den Rändern von axial angeströmten, am Ende geschlossenen Kanälen an einer Keramikmatrix abgeschieden. Das beladene Abgas passiert hierbei das Keramiksubstrat entsprechend den Strömungsdruckverhältnissen innerhalb des Kanals und der Dicke des Filterkuchens auf dem Keramiksubstrat. Dabei kann das Substrat katalytisch beschichtet sein, wodurch eine Rußoxidation auch bei niedrigeren Temperaturen ermöglicht wird. Nach einer gewissen Betriebsdauer steigt der Druckverlust bei der Durchströmung eines solchen Filters durch den Aufbau des Filtrats deutlich an. Die Regeneration des abgeschiedenen Rußes auf dem Keramiksubstrat erfolgt dann durch Oxidation mit dem Restsauerstoff des Abgases oder durch Zugabe eines Oxidationsmittels, z.B. Ozon oder Stickstoffdioxid. Dabei kann sich ein örtlich unterschiedlicher Abbrand des auf dem Filter befindlichen Rußes ergeben. Kritisch sind hierbei vor allem Betriebszustände, bei denen im hinteren, d.h. dem Einströmungsbereich abgewandten Bereich eine Restrußmenge angesammelt wird. Durch die höhere Filterkuchendichte wird der Gesamtströmungswiderstand über Filterkuchen und Substrat größer als im vorderen Bereich. Die Strömung läuft dann bevorzugt durch den vorderen Filterbereich. Die im hinteren Filterbereich durch die chemische Umsetzung des Rußes freigesetzte Wärme kann nicht mehr ausreichend abgeführt werden. Es ergibt sich eine lokale Überhitzung, verbunden mit sehr hohen Temperaturen, besonders im hinteren Filterbereich. In der Keramikmatrix können sich dadurch starke Temperaturgradienten ausbilden, die zu thermischen Spannungen, bis hin zu Substratbrüchen führen. Ein weiterer negativer Effekt kann die thermische Zerstörung der wirksamen Katalysatorbeschichtung auf dem Wandstromfilter sein, wodurch die Funktion deutlich beeinträchtigt wird.

Aus der US 4 390 355 ist ein Partikelfilter bekannt, der Einlasskanäle mit in Strömungsrichtung abnehmendem Querschnitt aufweist.

### Vorteile der Erfindung

Die erfindungsgemäße Anordnung mit den kennzeichnenden Merkmalen des unabhängigen Anspruchs hat demgegenüber den Vorteil, einen Filter bzw. einen Katalysator bereitzustellen, der gewährleistet, dass während der Regeneration eine Strömungsführung generiert wird, welche die Gefahr der Ausbildung einer Zone mit geringer Durchströmung und damit erhöhter Temperaturbildung vermindert. Ist die Anordnung als Partikelfilter ausgestaltet, so wird während der Beladung des Filters ein anfänglicher Unterschied in der Permeabilität durch das Wachstum des Filterkuchens, welches in Bereichen höherer Durchströmung verstärkt ist, teilweise kompensiert. Darüber hinaus können in vorteilhafter Weise unterschiedliche Zielrichtungen durch die gezielte Variation der Permeabilität der Begrenzungseinrichtungen verfolgt werden, die unterschiedliche Gradienten im Strömungswiderstand zur Folge haben. Vorteilhaft ist es hierbei, dass sich die Permeabilität zumindest zweier Begrenzungseinrichtungen in einströmöffnungsnahen und/oder in einströmöffnungsfernen Bereichen voneinander unterscheidet, so dass Gebiete unterschiedlichen Strömungswiderstands gebildet werden.

Durch die in den abhängigen Ansprüchen aufgeführten Maßnahmen sind vorteilhafte Weiterbildungen und Verbesserungen der im unabhängigen Anspruch angegebenen Anordnung möglich.

Besonders vorteilhaft ist es, die Permeabilität der Begrenzungseinrichtungen bzw. den Strömungswiderstand der Strömungsbereiche durch eine entsprechende Wahl der Dicken der Begrenzungseinrichtungen in Durchströmungsrichtung des Abgases einzustellen. Diese Variation kann in einfacher Weise sowohl in Richtung der einströmenden Gase verlaufen, als auch in radialer Richtung; im letzteren Fall haben unterschiedliche Strömungskanäle in Abhängigkeit von ihrer Position auf einem Substrat eine unterschiedliche Permeabilität bzw. einen unterschiedlichen Strömungswiderstand.

Insbesondere ist es vorteilhaft, die Permeabilität radial zu variieren, um über den Querschnitt eines Filters bzw. Katalysators eine verbesserte Strömungsverteilung bzw. eine bessere Ausnützung des Katalysators und/oder Filtervolumens zu erzielen. Diese Maßnahme verhindert in vorteilhafter Weise mit vergleichsweise geringem Aufwand ein mögliches Durchbrennen des Filters im Außenbereich, d.h. im Randbereich des Filters, und sorgt für eine bessere Ausnutzung des Volumens. Dadurch wird es auch möglich, kostengünstigere Filtersubstrate zu verwenden, welche eine vergleichsweise geringe Temperaturfestigkeit aufweisen (z.B. Cordierit im Vergleich zu Siliziumkarbid).

Weitere Vorteile ergeben sich aus den in den abhängigen Ansprüchen und in der Beschreibung genannten Merkmalen.

### Zeichnung

Ausführungsbeispiele der Erfindung sind in der Zeichnung dargestellt und in der nachfolgenden Beschreibung näher erläutert.

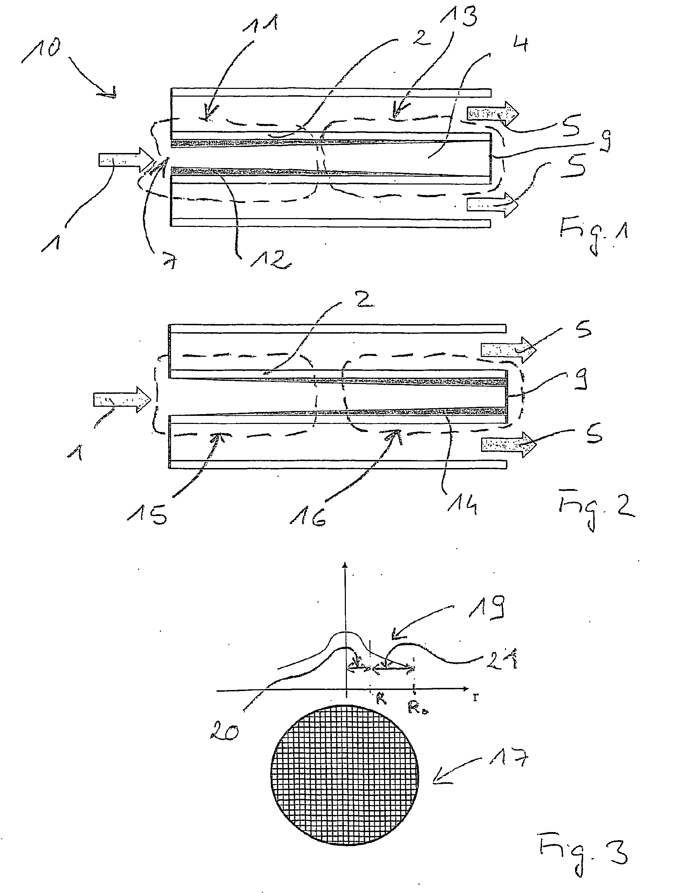

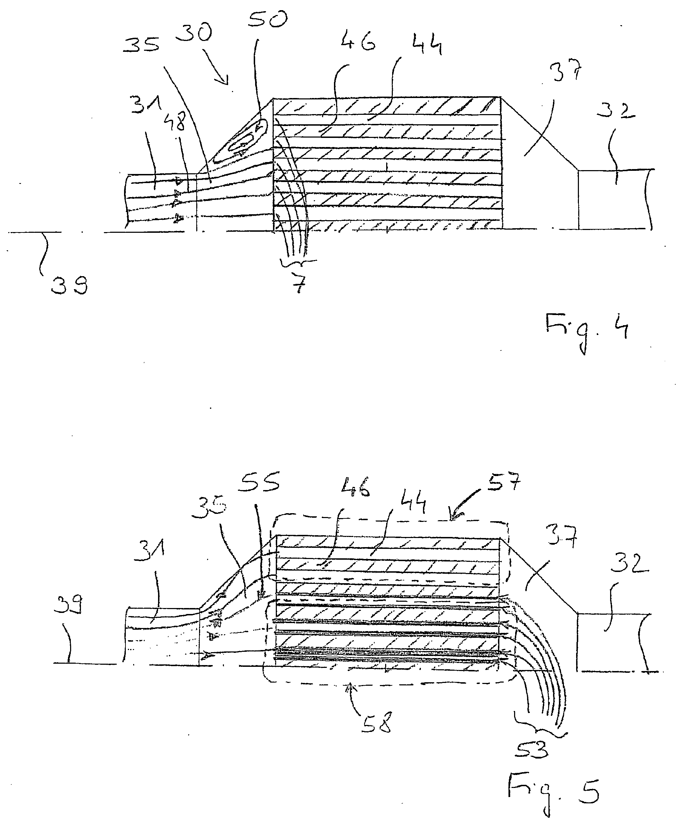

Es zeigen
Figur 1 einen Filter mit Strömungsbereichen mit in Strömungsrichtung abnehmendem Strömungswiderstand, Figur 2 einen Filter mit in Strömungsrichtung des Abgases zunehmendem Strömungswiderstand, Figur 3 ein Ausführungsbeispiel eines Wabenfilters aus Keramik mit einer radialen Variation des Strömungswiderstandes, Figur 4 einen Speicherkatalysator in Querschnittsseitenansicht und Figur 5 ein weiteres Ausführungsbeispiel der Erfindung.

### Beschreibung der Ausführungsbeispiele

In Figur 1 ist ein Teilbereich 10 eines aus Siliziumkarbid-Keramik oder Cordierit bestehenden, durchströmbaren Körpers dargestellt. Der mit Bezugszeichen 1 versehene Teil markiert einströmendes Abgas, das in einem exemplarisch dargestellten, als Filterkammer ausgebildeten Strömungsbereich 4 hineinströmt. Die Filterkammer 4 ist an der Einströmöffnung 7 am gegenüberliegenden Ende mit einem als Verschlusswand ausgebildeten Verschluss 9 begrenzt. Seitlich wird der im Querschnitt quadratisch ausgebildete Strömungsbereich auf allen 4 Seiten von jeweils einer, als Filterwand 2 ausgebildeten Begrenzungseinrichtung begrenzt. Die Filterwände 2 sind auf der der Filterkammer 4 zugewandten Seite jeweils mit einer Keramikschicht 12 bedeckt, deren Dicke von der Einströmöffnung 7 hin zum Verschlussbereich 9 abnimmt. Die Filterwände 2 sind für das Abgas durchlässig (permeabel), so dass das Abgas jenseits der Filterwände 2 den ausschnitthaft dargestellten Filterkörper wieder verlassen kann (vgl. die mit Bezugszeichen 5 versehenen Pfeile, die das ausströmende Abgas markieren). Der der Einströmöffnung 7 zugewandte Bereich der Filterkammer 4 stellt hierbei ein erstes Gebiet mit einem ersten Strömungswiderstand für das Abgas durch die Filterwand hindurch dar, und der dem Verschlussbereich 9 zugewandte Bereich der Filterkammer 4 stellt ein zweites Gebiet 13 mit einem Strömungswiderstand dar, der kleiner ist als der Strömungswiderstand des Gebiets 11. Der vom Abgas durchströmbare Filterkörper setzt sich hierbei aus einer Vielzahl von Filterkammern 4 zusammen, die parallel zur abgebildeten Filterkammer angeordnet sind und sich unmittelbar oberhalb und unterhalb des in Figur 1 dargestellten Bereichs anschließen.

Das Abgas strömt in an sich bekannter Weise durch einen Filterkörper hindurch, wobei sich an den Filterwänden Ruß ablagern kann, während das Abgas die permeablen Filterwände 2 penetriert und jenseits der den jeweiligen Strömungsbereich begrenzenden Filterwände den durchströmbaren Filterkörper wieder verlässt. Durch die zusätzliche Schicht 12 wird die Filterdurchströmung verbessert, indem der Strömungswiderstand in Strömungsrichtung des Abgases abnimmt. Dadurch wird der hintere Bereich des Filters in der Nähe der Verschlussbereiche 9 besser durchströmt. Dies spielt vor allem bei der Regeneration eines Partikelfilters eine Rolle, da bei einer schlechten Durchströmung des hinteren Bereichs der Wärmeabfluss ansonsten nicht mehr gewährleistet ist, so dass Wärmespannungen auftreten, die zu einer Beschädigung des Filters führen können. Die Schicht 12 auf den Filterwänden 2 wurde hierbei auf das die Filterwände 2 bildende Keramiksubstrat aufgetragen. Der gesamte Strömungswiderstand setzt sich somit aus dem Wandwiderstand des Substrates und dem Strömungswiderstand der zusätzlich aufgebrachten Schicht 12 zusammen. Die Variation der Schichtdicke kann durch einen entsprechend gewählten Beschichtungsprozess eingestellt werden.

Die Schicht 12 kann in einer alternativen Ausgestaltung ein Washcoat sein, welcher zusätzlich katalytisch wirksame Komponenten enthält. Diese Washcoat-Beschichtung mit einer Suspension von Aluminiumoxidpartikeln auf der Trägersubstanz kann die wirksame Oberfläche deutlich, zum Beispiel um bis zu drei Größenordnungen, vergrößern. In dieser Beschichtung können Edelmetalle, zum Beispiel Platin und Palladium bzw. Mischungen dieser Komponenten, enthalten sein. Auch Ceroxid kann in der Beschichtung enthalten sein, wobei Ceroxid eine Einspeicherung von Sauerstoff unterstützt. In einer vereinfachten Ausgestaltung wird der Washcoat bzw. die Schicht 12 nur im einströmöffnungsnahen Bereich der Strömungsbereiche bzw. Filterkammern 4 aufgebracht, während beispielsweise der letzte Zentimeter des Keramikmonoliths unbeschichtet bleibt. Neben einer Tauchtechnik mit entsprechend verringerter Eintauchtiefe für die Washcoat-Beschichtung kann auch mit einer vorgelagerten Maskentechnik gearbeitet werden. In einer weiteren alternativen Ausgestaltung wird anstelle eines Aufbringens der Schicht 12 die Dicke des Wandmaterials der Filterwände 2 nahe der Verschlussbereiche verringert. Dies verkleinert ebenfalls den Wandströmungswiderstand relativ zum einströmungsöffnungsnahen Bereich, was den bereits genannten, positiven Effekt auf den Strömungsfluß erzeugt. Außer bei Keramikwabenfiltern ist die Anordnung bzw. das Verfahren der Schichtauftragung bzw. der Wandabtragung auch bei Sintermetallfiltern, bei Oxidationskatalysatoren oder bei NOx-Speicherkatalysatoren einsetzbar. In einer weiteren alternativen Ausgestaltung wird weder eine Schicht aufgebracht noch Wandmaterial abgetragen. In den Filterwänden sind Poren enthalten, deren Flächendichte bzw. deren Volumendichte bzw. deren durchschnittliche Größe in vorderen Filterbereichen in kontrollierter Weise geringfügig durch Einbringen zusätzlichen Materials verkleinert werden kann. Das Material muss hierbei den Betriebsbedingungen des Filters standhalten und sollte deshalb aus einem geeigneten Keramik- oder Precursor-Material bestehen, welches anschließend durch Tempern oder Brennen fixiert wird. Eine weitere Möglichkeit besteht darin, aus der Gasphase Partikel aus Keramik oder einem Precursor so auf der Oberfläche des Partikelfilters abzuscheiden, dass sich diese bevorzugt im vorderen Bereich des Filters ablagern. Die Fixierung dieser Schicht auf dem Substrat erfolgt dann in einem entsprechenden Temper- oder Brennprozess.

Figur 2 zeigt einen Teilbereich eines alternativen Wabenfilters aus Keramik, bei dem eine auf den Filterwänden 2 aufgebrachte Schicht 14 eine Dicke aufweist, die in Strömungsrichtung des Abgases zunimmt. Hierbei bilden sich analog zur in Figur 1 dargestellten Anordnung 2 Gebiete 15 und 16 mit unterschiedlichem Strömungswiderstand aus, wobei im vorliegenden Fall der Strömungswiderstand für das Abgas zum Verschlussbereich 9 zunimmt.

Ziel dieser Form der Gradientenschicht ist es, eine Ansammlung von Ruß im hinteren Bereich des Filters zu vermeiden. Aufgrund des geringeren Strömungswiderstandes am Eintritt des Filters wird ein großer Teil der Strömung in diesem Bereich fließen, so dass sich an dieser Stelle auch das Maximum an Ruß ablagern wird. Im vorderen Bereich des Filters ist die Regeneration unter Ausnutzung des CRT-Effekts ("CRT"="continuously regenerating trap") jedoch unproblematischer. Der Ruß im vorderen Filterbereich wird häufig durch Stickstoffdioxid oxidiert und verbrennt bei einer thermischen Oxidation zuerst, so dass der konvektive Abtransport der Reaktionswärme verbunden mit einer guten Durchströmung gewährleistet ist.

Figur 3 illustriert in schematischer Darstellung den Querschnitt 17 eines erFndungsgemäßen Keramikwabenfilters. Oberhalb des Querschnitts 17 ist in einem Diagramm der Strömungswiderstand 19 in Abhängigkeit vom Radius r dargestellt. Die Beschaffenheit der Filterwände 2 (vgl. Figur 1 und 2) ist so gewählt, dass sich die im Diagramm abgebildete radiale Verteilung des Strömungswiderstandes in den einzelnen, parallel zueinander angeordneten Filterkammern ergibt. Der zylinderförmig ausgebildete Filterkörper weist hierbei einen Radius R0 auf. Der Strömungswiderstand ist im Zentrum des Filterkörpers am größten und fällt zum Rand hin ab. Dabei kann zwischen zwei Gebieten 20 und 21 mit unterschiedlichem Strömungswiderstand unterschieden werden. Das erste Gebiet 20 befindet sich im Zentrum des Filterkörpers und reicht von der Symmetrieachse des zylindrischen Filterkörpers bis zu einem Radius R. Das zweite Gebiet 21 geht vom Radius R bis zum äußeren Rand des Filterkörpers. Dabei ist der Strömungswiderstand durch eine entsprechende Gestaltung der Filterwände im Gebiet 20 im Vergleich zum Strömungswiderstand des Gebietes 21 erhöht.

Durch die Variation des Strömungswiderstands in radialer Richtung soll eine gleichmäßige Durchströmung des Filters unterstützt werden. Häufig tritt bei Filtern das Problem auf, dass nur der mittlere Bereich des Filters durchströmt wird. Bei Dieselpartikelfiltern kann dies dazu führen, dass sich in den äußeren Bereichen des Filters größere Mengen Ruß absetzen, was bei einer Regeneration zu einer erhöhten Temperaturbelastung führen kann, wenn dieser Bereich nicht gut durchströmt wird. Durch einen erhöhten Strömungswiderstand im mittleren Bereich des Filters, also im Gebiet 20, verlagert sich die Strömung mehr in die äußeren Bereiche des Filters. Auch durch einen radialen Gradient im Strömungswiderstand der einzelnen Filterkanäle, d.h. einer unterschiedlich ausgestalteten Permeabilität von unterschiedlichen Strömungskanälen, kann eine Verbesserung der Filterdurchströmung erzielt werden.

Die Erzeugung eines höheren Strömungswiderstands in der Mitte eines Filters oder Katalysators ist nicht auf einen Dieselpartikelfilter beschränkt, sondern kann auch bei Oxidationskatalysatoren oder z.B. NOx-Speicherkatalysatoren zu einer besseren Strömungsverteilung über den Querschnitt und zu einer besseren Ausnutzung des Katalysatorvolumens führen. Dies wird anhand der Figuren 4 und 5 näher erläutert.

Figur 4 zeigt die Querschnittsseitenansicht eines Speicherkatalysators 30, wobei der Einfachheit halber nur eine Hälfte des Speicherkatalysators auf einer Seite der Symmetrielinie 39 dargestellt ist. Eine Abgasleitung 31 führt über einen Diffusor 35 zu einem Bereich des Speicherkatalysators mit parallel zueinander verlaufenden als Strömungskanäle 44 ausgebildeten Strömungsbereichen, die, ausgehend von dem Diffusor zugewandten Einströmöffnungen 7, sich bis zum sich stromabwärts anschließenden Konfusor 37 erstrecken, der wiederum in eine weiterführende Abgasleitung 32 mündet. Die Strömungskanäle können beispielsweise quadratische, kreisförmige oder auch kreisringförmige Querschnittsflächen senkrecht zur Abgasströmung haben; im letzteren Fall ist die schematische Darstellung so zu interpretieren, dass für jeden Strömungskanal immer nur eine Hälfte des Seitenquerschnitts abgebildet ist. Die Strömungskanäle 44 sind von als katalytisch beschichtete Kanalwände 46 ausgebildeten Begrenzungseinrichtungen begrenzt, die im Unterschied zu den in den Figuren 1 bis 3 abgebildeten Strukturen für das Abgas undurchlässig ausgebildet sind. Die mit Bezugszeichen 48 versehenen Linien stellen Strömungslinien eines strömenden Abgases dar, mit Bezugszeichen 50 sind Wirbellinien bezeichnet.

Die Querschnittsflächen der Strömungskanäle senkrecht zur Hauptströmungsrichtung des Abgases von der Abgasleitung 31 zur Abgasleitung 32 haben im Inneren des Katalysators wie im Randbereich des Katalysators die gleiche Größe. Bedingt durch die Aufweitung des Strömungsraums im Bereich des Diffusors bilden sich jedoch randständig Abgaswirbel 50 aus, und die Strömungskanäle im Inneren des Katalysators werden stärker durchströmt als die im Randbereich des Katalysators hinter den Wirbellinien 50 liegenden Strömungskanäle.

Figur 5 zeigt eine im Vergleich zur Anordnung nach Figur 4 abgeänderte Katalysatorvorrichtung. Gleiche oder ähnliche Bestandteile sind mit gleichem Bezugszeichen wie in Figur 4 versehen und werden nicht nochmals beschrieben. Die Kanalwände 46 sind mit Schichten 53 bedeckt, deren Dicke vom Inneren des Katalysators nahe der Symmetrielinie 39 ausgehend hin zum Randbereich abnimmt. Das Material der Schichten ist das gleiche wie das Material der Kanalwände, eine katalytisch aktive Beschichtung befindet sich statt auf den Kanalwänden 46 auf den auf den Kanalwänden aufgebrachten Schichten 53. Die Strömungslinien 55 symbolisieren den Strömungsverlauf des Abgases. Im Randbereich des Katalysators ist mit gestrichelter Linie ein erstes Gebiet 57 niedrigen Strömungswiderstands und im inneren Bereich des Katalysators ein zweites Gebiet 58 hohen Strömungswiderstands eingezeichnet. Die Beschichtung ist mittels einer Maskentechnik erzeugt worden, bei der insbesondere die Randbereiche eines Katalysatorgrundkörpers auf den Stirnseiten abgedeckt wurden, bevor die Schichten in einem Tauchbad aufgebracht wurden. Im einfachsten Fall sind einige Kanalwände im Inneren des Katalysators beschichtet, während die Kanalwände in Randbereichen des Katalysators unbeschichtet bleiben. Die Beschichtung besteht aus einem Washcoat-Überzug.

Dickere Schichten 53 im Zentrum des Katalysators als im Randbereich des Katalysators bzw. Schichten 53 an sich im Zentrum des Katalysators (im Vergleich zu schichtfreien Bereichen im Randbereich) erhöhen den Strömungswiderstand im Zentrum des Katalysators im Vergleich zum Randbereich, so dass eine gleichmässigere Beströmung aller Strömungskanäle im Vergleich zur Anordnung nach Figur 4 gewährleistet ist (der Strömungswiderstand im Gebiet 58 ist höher als im Gebiet 57). Durch den vom Zentrum zum Rand hin abnehmenden Strömungswiderstand wird die Strömung des Abgases im Randbereich im Vergleich zum Zentrum gerade so begünstigt, dass die ohne Beschichtung 53 bestehende unterschiedliche Beströmung der Kanäle mit Abgas tendenziell ausgeglichen wird.

Der Katalysator kann alternativ auch als Dreiwegekatalysator, als Oxidationskatalysator oder als Katalysator zur selektiven katalytischen Reduktion ausgebildet sein. In einer Ausführungsvariante kann der Katalysatorgrundkörper auch bereits so gefertigt sein, dass die Strömungskanäle im Inneren des Körpers einen größeren Strömungswiderstand aufweisen als im Randbereich. Der Körper braucht dann nur noch gleichmässig mit einer katalytisch aktiven Substanz beschichtet zu werden, falls der Grundkörper an sich nicht schon katalytisch aktive Materialien enthält. In einer weiteren alternativen Ausführungsform können die Schichten 53 auch bereits das katalytisch aktive Material enthalten. Neben Washcoat-Überzügen ist auch jede andere mögliche Beschichtungsform geeignet, mit der ein gleichmässiger Materialauftrag in den Strömungskanälen erzielt werden kann. Der Katalysator 30 kann in einer alternativen Ausfiihrungsform auch asymmetrisch ausgebildet sein, braucht also keine Symmetrielinie 39 aufzuweisen.

## Patentansprüche

1. Abgasnachbehandlungsanordnung mit einem vom Abgas einer Brennkraftmaschine durchströmbaren Körper, wobei der Körper voneinander abgegrenzte, von jeweils einer Begrenzungseinrichtung (2, 12, 14, 46) begrenzte Strömungsbereiche (4, 44) mit jeweils mindestens einer mit Abgas beaufschlagbaren Einströmöffnung (7) aufweist, wobei die Begrenzungseinrichtungen für das Abgas permeabel sind und im Abgas enthaltene Rußteilchen zurückgehalten werden können, **dadurch gekennzeichnet, dass** die Permeabilität der Begrenzungseinrichtungen variiert, indem sich die Permeabilität zumindest zweier Begrenzungseinrichtungen in einströmöffnungsnahen und/oder in einströmöffnungsfernen Bereichen voneinander unterscheidet, so dass Gebiete unterschiedlichen Strömungswiderstands gebildet werden.

2. Abgasnachbehandlungsanordnung nach Anspruch 1, **dadurch gekennzeichnet, dass** die unterschiedliche Permeabilität der Begrenzungseinrichtungen zumindest teilweise durch entsprechend gewählte Dicken der Begrenzungseinrichtungen bedingt ist.

3. Abgasnachbehandlungsanordnung nach einem der vorhergehenden Ansprüche, **dadurch gekennzeichnet, dass** die Begrenzungseinrichtungen jeweils eine Wand und eine die Wand zumindest teilweise bedeckende Schicht (12, 14, 53) aufweisen, wobei die Dicke der Schicht variiert.

4. Abgasnachhehandlungsanordnung nach einem der vorhergehenden Ansprüche, **dadurch gekennzeichnet, daß** sich die Permeabilität mindestens einer Begrenzungseinrichtung in einem der Einströmöffnung zugewandten Bereich (11; 15) der Begrenzungseinrichtung von der Permeabilität der Begrenzungseinrichtung in einem der Einströmöffnung abgewandten Bereich (13; 16) unterscheidet.

5. Abgasnachbehandlungsanordnung nach einem der vorhergehenden Ansprüche, **dadurch gekennzeichnet, dass** die Begrenzungseinrichtungen zumindest teilweise aus porösem Material bestehen und dass die unterschiedliche Permeabilität der Begrenzungseinrichtungen zumindest teilweise durch entsprechend gewählte Porendichten und/oder Porengrößen in den Gebieten bedingt ist.

6. Abgasnachbehandlungsanordnung nach einem der vorhergehenden Ansprüche, **dadurch gekennzeichnet, daß** die Strömungsbereiche Querschnittsflächen senkrecht zur Strömungsrichtung des Abgases aufweisen und dass die Begrenzungseinrichtungen derartig unterschiedlich ausgestaltet sind, daß sich die Flächeninhalte der Querschnittsflächen in den Gebieten voneinander unterscheiden.

7. Abgasnachbehandlungsanordnung nach einem der vorhergehenden Ansprüche, **dadurch gekennzeichnet, dass** der durchströmbare Körper einen Oxidationskatalysator oder einen Speicherkatalysator (30) zur Abgasentstickung bildet.

8. Abgasnachbehandlungsanordnung nach einem der vorhergehenden Ansprüche, **dadurch gekennzeichnet, dass** der durchströmbare Körper ein Partikelfilter bildet.

9. Abgasnachbehandlungsanordnung nach einem der vorhergehenden Ansprüche, **dadurch gekennzeichnet, dass** die Begrenzungseinrichtungen durch Keramikwände gebildet werden.

10. Abgasnachbehandlungsanordnung nach einem der vorhergehenden Ansprüche, **dadurch gekennzeichnet, dass** die Begrenzungseinrichtungen durch Metallgeflechte gebildet werden.

11. Abgasnachbehandlungsanordnung nach Anspruch 10, **dadurch gekennzeichnet, dass** das Filter ein Sintermetallfilter ist.

12. Abgasnachbehandlungsanordnung nach einem der vorhergehenden Ansprüche, **dadurch gekennzeichnet, dass** die Strömungsbereiche parallel zueinander angeordnet ist, so dass sich deren Einströmöffnungen auf einer Seite des Körpers befinden.

## Claims

1. Exhaust treatment arrangement with a body through which the exhaust of an internal combustion engine can flow, the body having flow regions (4, 44) that are delimited from one another, delimited in each case by a delimiting device (2, 12, 14, 46), each with at least one inflow opening (7) to which exhaust can be admitted, the delimiting devices being permeable to the exhaust and able to retain soot particles contained in the exhaust, **characterized in that** the permeability of the delimiting devices varies, **in that** the permeability of at least two delimiting devices in regions near the inflow opening and/or remote from the inflow opening differs from each other, so that zones of different flow resistance are formed.

2. Exhaust treatment arrangement according to Claim 1, **characterized in that** the different permeability of the delimiting devices is at least partially determined by correspondingly chosen thicknesses of the delimiting devices.

3. Exhaust treatment arrangement according to one of the preceding claims, **characterized in that** the delimiting devices each have a wall and a layer (12, 14, 53) at least partially covering the wall, the thickness of the layer varying.

4. Exhaust treatment arrangement according to one of the preceding claims, **characterized in that** the permeability of at least one delimiting device in a region (11; 15) of the delimiting device facing the inflow opening differs from the permeability of the delimiting device in a region (13; 16) facing away from the inflow opening.

5. Exhaust treatment arrangement according to one of the preceding claims, **characterized in that** the delimiting devices consist at least partially of porous material and **in that** the different permeability of the delimiting devices is at least partially determined by correspondingly chosen pore densities and/or pore sizes in the zones.

6. Exhaust treatment arrangement according to one of the preceding claims, **characterized in that** the flow regions have cross-sectional areas perpendicular to the direction of flow of the exhaust and **in that** the delimiting devices are configured differently from one another in such a way that the area contents of the cross-sectional areas in the zones differ from one another.

7. Exhaust treatment arrangement according to one of the preceding claims, **characterized in that** the body which can be flowed through forms an oxidation catalyst or a storage catalyst (30) for removing NOₓ from the exhaust.

8. Exhaust treatment arrangement according to one of the preceding claims, **characterized in that** the body which can be flowed through forms a particle filter.

9. Exhaust treatment arrangement according to one of the preceding claims, **characterized in that** the delimiting devices are formed by ceramic walls.

10. Exhaust treatment arrangement according to one of the preceding claims, **characterized in that** the delimiting devices are formed by metal meshes.

11. Exhaust treatment arrangement according to Claim 10, **characterized in that** the filter is a sintered metal filter.

12. Exhaust treatment arrangement according to one of the preceding claims, **characterized in that** the flow regions are arranged parallel to one another, so that their inflow openings are located on one side of the body.

## Revendications

1. Système de post-traitement des gaz d'échappement comportant un organe traversé par les gaz d'échappement d'un moteur à combustion, cet organe ayant des zones d'écoulement (4, 44) séparées les unes des autres et délimitées chacune par une installation de limitation (2, 12, 14, 46), ayant au moins un orifice d'entrée (7) recevant les gaz d'échappement,
les installations de limitation étant perméables aux gaz d'échappement et retenant les particules de suie contenues dans les gaz d'échappement,
**caractérisé en ce que**
la perméabilité des installations de limitation varie **en ce que** cette perméabilité d'au moins deux installations de limitation diffère à proximité des orifices d'entrée et/ou dans des zones éloignées des orifices d'entrée de façon à réaliser des zones ayant une résistance à l'écoulement, différente.

2. Système de post-traitement des gaz d'échappement selon la revendication 1,
**caractérisé en ce que**
la perméabilité différente des installations de limitation est conditionnée au moins en partie par des épaisseurs sélectionnées de manière appropriée pour les installations de limitation.

3. Système de post-traitement selon l'une des revendications précédentes,
**caractérisé en ce que**
les installations de limitation comprennent chacune une paroi et une couche (12, 14, 53) couvrant au moins en partie la paroi, et l'épaisseur de la couche est variable.

4. Système de post-traitement selon l'une des revendications précédentes,
**caractérisé en ce que**
la perméabilité d'au moins une installation de limitation dans une zone (11 ; 15) de l'installation de limitation, tournée vers un orifice d'entrée diffère de la perméabilité de l'installation de limitation dans une zone (13 ; 16) éloignée de l'orifice d'entrée.

5. Système de post-traitement selon l'une des revendications précédentes,
**caractérisé en ce que**
les installations de limitation sont au moins en partie en matière poreuse, et
la perméabilité différente des installations de limitation est conditionnée au moins en partie par la densité choisie des pores et/ou la dimension des pores dans les zones concernées.

6. Système de post-traitement selon l'une des revendications précédentes,
**caractérisé en ce que**
les zones d'écoulement ont des surfaces de section perpendiculaire à la direction d'écoulement des gaz d'échappement et les installations de limitation sont conçues différemment de façon que le contenu des surfaces de section des zones diffère.

7. Système de post-traitement selon l'une des revendications précédentes,
**caractérisé en ce que**
le corps traversé par le fluide forme un catalyseur d'oxydation ou un catalyseur accumulateur (30) pour enlever l'azote des gaz d'échappement.

8. Système de post-traitement selon l'une des revendications précédentes,
**caractérisé en ce que**
le corps traversé par le fluide forme un filtre à particules.

9. Système de post-traitement selon l'une des revendications précédentes,
**caractérisé en ce que**
les installations de limitation sont formées par des parois en céramique.

10. Système de post-traitement selon l'une des revendications précédentes,
**caractérisé en ce que**
les installations de limitation sont formées par des tissus métalliques.

11. Système de post-traitement selon la revendication 10,
**caractérisé en ce que**
le filtre est un filtre en métal fritté.

12. Système de post-traitement selon l'une des revendications précédentes,
**caractérisé en ce que**
les zones de passage de flux sont parallèles de sorte que leurs orifices d'entrée se trouvent d'un côté du corps.
